(19) Europäisches Patentamt
European Patent Office
Office européen des brevets

(11) EP 2 909 244 B1

(12) **EUROPEAN PATENT SPECIFICATION**

(45) Date of publication and mention of the grant of the patent:
**18.03.2020 Bulletin 2020/12**

(21) Application number: **13773713.6**

(22) Date of filing: **03.10.2013**

(51) Int Cl.:
***C08F 210/06*** *(2006.01)* ***C08F 4/651*** *(2006.01)*

(86) International application number:
**PCT/EP2013/070609**

(87) International publication number:
**WO 2014/060217 (24.04.2014 Gazette 2014/17)**

(54) **PROCESS FOR THE PREPARATION OF PROPYLENE RANDOM COPOLYMERS**

VERFAHREN ZUR HERSTELLUNG VON RANDOM-PROPYLENCOPOLYMEREN

PROCÉDÉ DE PRÉPARATION DE COPOLYMÈRES ALÉATOIRES DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2012 US 201261714655 P**
**16.10.2012 EP 12188634**

(43) Date of publication of application:
**26.08.2015 Bulletin 2015/35**

(73) Proprietor: **Basell Poliolefine Italia S.r.l.**
**20121 Milano (IT)**

(72) Inventors:
- **GALVAN, Monica**
**I-44122 Ferrara (IT)**
- **NEUMANN, Andreas**
**I-44122 Ferrara (IT)**
- **CAPUTO, Tiziana**
**I-44122 Ferrara (IT)**
- **SQUARZONI, Stefano**
**I-44122 Ferrara (IT)**
- **MAZZUCCO, Antonio**
**I-44122 Ferrara (IT)**
- **FUSCO, Ofelia**
**I-44122 Ferrara (IT)**
- **GADDI, Benedetta**
**I-44122 Ferrara (IT)**
- **COLLINA, Gianni**
**I-44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2010/146074 WO-A1-2011/061134**
**WO-A1-2011/076371 WO-A1-2012/139897**
**WO-A2-2007/147865**

- **DATABASE CA [Online] CHEMICAL ABSTRACTS SERVICE, COLUMBUS, OHIO, US; 2009, CHENG, WEISHU: "Study on process for polypropylene random copolymer resin for pipes", XP002689114, retrieved from STN Database accession no. 2010:263899 & CHENG, WEISHU: "Study on process for polypropylene random copolymer resin for pipes", HECHENG SHUZHI JI SULIAO , 26(6), 35-38 CODEN: HSSUEJ; ISSN: 1002-1396, 2009, XP008158779,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 909 244 B1

## Description

The present invention relates to a process for the preparation of propylene random copolymers, to the polymers obtainable thereby and to their use for making pipe systems.

In pressure pipes, the transported fluid may have varying temperatures, usually within the range of about 0 °C to about 70 °C. Such pipes are typically made of polyolefin, usually polyethylene or polypropylene. The temperatures in e.g. a hot water pipe, typically used for plumbing and heating purposes, range from 30°C to 70°C which means that the pipe must be able to withstand a higher temperature than that for a secure long term use. The good thermal resistance of polypropylene compared with other polyolefins is particularly useful for applications such as hot water pipes as mentioned above.

A further problem of pipes obtained by polymer materials is the handling. During handling, pipes could be accidentally damaged. For this reason high (Izod) impact strength is required.

Propylene random copolymers (PP-R) have been in use for pipe production since early 1990s and, over the past years, production of PP-R pipes has increased based on factor such as the pipe's strength, durability, joint integrity and long term cost effectiveness.

US6362298, for instance, discloses high-molecular-weight copolymers of propylene with 1 to 10% by weight of ethylene and their use for making pipes. The pipes made with those copolymers are reported to be endowed with low brittleness and a smooth surface and in addition high toughness and good rigidity in combination with excellent creep rupture strength.

**The study of** Cheng Weishu "Study on proves for polypropylene random copolymer resins for pipes", Hecheng Shuzhi Ji Suliao, 26(6), 35-38, ISSN 1002-1396. 2009**, discloses propylene random copolymers to be used in pipes; however it does not disclose the use of two electron donor compounds in the synthesis of such copolymers.**

Materials exhibiting improved properties, particularly meliorated Izod impact strength, would still be desirable. Therefore, the present invention sets out to provide novel propylene random copolymers for use in pipe systems. It has been found that those and other results can be achieved by using a polypropylene obtained by using a specific class of Ziegler/Natta catalysts.

Thus, according to a first aspect, the present invention provides a process for the preparation of random copolymer of propylene containing **from 3.8 to 4.8** % by weight of ethylene units, comprising the step of copolymerizing propylene and ethylene in the presence of a catalyst system comprising the product obtained by contacting the following components:

(a) a solid catalyst component **having an average particle size ranging from 25 to 65 μm and** comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound.

In the solid catalyst component (a) the succinate is preferably selected from succinates of formula (I) below:

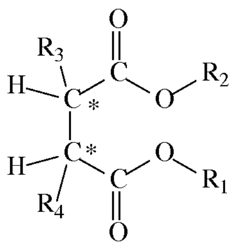

(I)

in which the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, $C_3$-$C_{20}$ cycloalkyl, $C_5$-$C_{20}$ aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S)

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

Particularly preferred are the compounds in which the $R_3$ and/or $R_4$ radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

Among the 1,3-diethers mentioned above, particularly preferred are the compounds of formula (II)

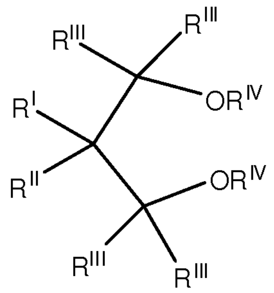

(II)

where $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

Preferably, $R^{IV}$ is a 1-6 carbon atom alkyl radical and more particularly a methyl while the $R^{III}$ radicals are preferably hydrogen. Moreover, when $R^I$ is methyl, ethyl, propyl, or isopropyl, $R^{II}$ can be ethyl, propyl, isopropyl, butyl, isobutyl, tert-butyl, isopentyl, 2-ethylhexyl, cyclopentyl, cyclohexyl, methylcyclohexyl, phenyl or benzyl; when $R^I$ is hydrogen, $R^{II}$ can be ethyl, butyl, sec-butyl, tert-butyl, 2-ethylhexyl, cyclohexylethyl, diphenylmethyl, p-chlorophenyl, 1-naphthyl, 1-decahydronaphthyl; $R^I$ and $R^{II}$ can also be the same and can be ethyl, propyl, isopropyl, butyl, isobutyl, tert-butyl, neopentyl, phenyl, benzyl, cyclohexyl, cyclopentyl.

Specific examples of ethers that can be advantageously used include: 2-(2-ethylhexyl)1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-fluorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane,2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3-dimetoxypropane, 2,2-di-tert-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimetoxypropane, 2-cyclohexyl-2-cyclohexylmethyl-1,3-dimethoxypropane.

Furthermore, particularly preferred are the 1,3-diethers of formula (III)

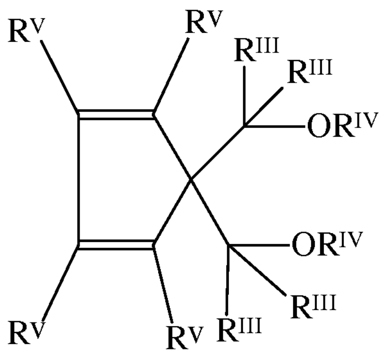

(III)

where the radicals $R^{IV}$ have the same meaning explained above and the radicals $R^{III}$ and $R^{V}$ radicals, equal or different to each other, are selected from the group consisting of hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkaryl and $C_7$-$C_{20}$ aralkyl radicals and two or more of the $R^{V}$ radicals can be bonded to each other to form condensed cyclic structures, saturated or unsaturated, optionally substituted with $R^{VI}$ radicals selected from the group consisting of halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkaryl and $C_7$-$C_{20}$ aralkyl radicals; said radicals $R^{V}$ and $R^{VI}$ optionally containing one or more heteroatoms as substitutes for carbon or hydrogen atoms, or both.

Preferably, in the 1,3-diethers of formulae (I) and (II) all the $R^{III}$ radicals are hydrogen, and all the $R^{IV}$ radicals are methyl. Moreover, are particularly preferred the 1,3-diethers of formula (II) in which two or more of the $R^{V}$ radicals are bonded to each other to form one or more condensed cyclic structures, preferably benzenic, optionally substituted by $R^{VI}$ radicals. Specially preferred are the compounds of formula (IV):

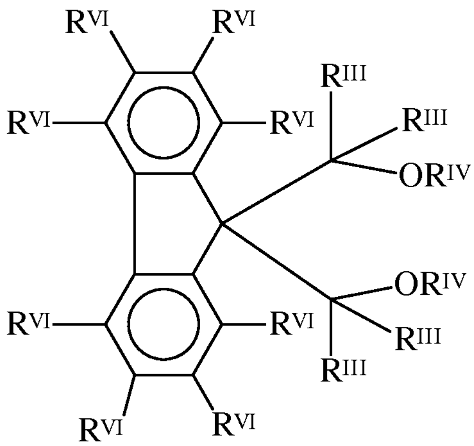

(IV)

where the $R^{VI}$ radicals equal or different are hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ aralkyl radicals, optionally containing one or more heteroatoms selected from the group consisting of N, 0, S, P, Si and halogens, in particular Cl and F, as substitutes for carbon or hydrogen atoms, or both; the radicals $R^{III}$ and $R^{IV}$ are as defined above for formula (II).

Specific examples of compounds comprised in formulae (II) and (III) are:

1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1--bis(methoxymethyl)indene; 1,1-bis(methoxymethyl)-2,3-dimethylindene;
1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;

1,1-bis(methoxymethyl)-4-phenyl-2-methylindene;
1,1-bis(methoxymethyl)-4-cyclohexylindene;
1,1-bis(methoxymethyl)-7-(3,3,3-trifluoropropyl)indene;
1,1-bis(methoxymethyl)-7-trimethyisilylindene;
1,1-bis(methoxymethyl)-7-trifluoromethylindene;
1,1 -bis(methoxymethyl)-4,7-dimethyl-4,5,6,7-tetrahydroindene;
1,1-bis(methoxymethyl)-7-methylindene;
1,1-bis(methoxymethyl)-7-cyclopenthylindene;
1,1-bis(methoxymethy1)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
1,1-bis(methoxymethyl)-1H-benz[e]indene;
1,1-bis(methoxymethyl)-1H-2-methylbenz[e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

As explained above, the catalyst component (a) comprises, in addition to the above electron donors, a titanium compound having at least a Ti-halogen bond and a Mg halide. The magnesium halide is preferably $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and $TiCl_3$; furthermore, also Ti-haloalcoholates of formula $Ti(OR)_{n-y}X_y$ can be used, where n is the valence of titanium, y is a number between 1 and n-1 X is halogen and R is a hydrocarbon radical having from 1 to 10 carbon atoms.

Preferably catalyst component (a) has an average particle size ranging from 25 to 65 $\mu$m. As explained the succinate is present in an amount ranging from 40 to 90% by weight with respect to the total amount of donors. Preferably it ranges from 50 to 85% by weight and more preferably from 65 to 80% by weight. The 1,3-diether preferably constitutes the remaining amount.

The alkyl-Al compound (b) is preferably chosen among the trialkyl aluminum compounds such as for example triethylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. The external electron donor compound is used in such an amount to give a molar ratio between the organo-aluminum compound and said electron donor compound of from 5 to 500, preferably from 5 to 400 and more preferably from 10 to 200.

The catalyst forming components can be contacted with a liquid inert hydrocarbon solvent such as, e.g., propane,

n-hexane or n-heptane, at a temperature below 60°C and preferably from 0 to 30°C for a time period of from 6 seconds to 60 minutes.

The above catalyst components (a), (b) and optionally (c) can be fed to a pre-contacting vessel, in amounts such that the weight ratio (b)/(a) is in the range of 0.1-10 and if the compound (c) is present, the weight ratio (b)/(c) is weight ratio corresponding to the molar ratio as defined above. Preferably, the said components are pre-contacted at a temperature of from 10 to 20°C for 1-30 minutes. The precontact vessel is generally a stirred tank reactor.

Preferably, the precontacted catalyst is then fed to a prepolymerization reactor where a prepolymerization step takes place. The prepolymerization step can be carried out in a first reactor selected from a loop reactor or a continuously stirred tank reactor, and is generally carried out in liquid-phase. The liquid medium comprises liquid alpha-olefin monomer(s), optionally with the addition of an inert hydrocarbon solvent. Said hydrocarbon solvent can be either aromatic, such as toluene, or aliphatic, such as propane, hexane, heptane, isobutane, cyclohexane and 2,2,4-trimethylpentane. The amount of hydrocarbon solvent, if any, is lower than 40% by weight with respect to the total amount of alpha-olefins, preferably lower than 20% by weight. Preferably, step (i)a is carried out in the absence of inert hydrocarbon solvents.

The average residence time in this reactor generally ranges from 2 to 40 minutes, preferably from 10 to 25 minutes. The temperature ranges between 10°C and 50°C, preferably between 15°C and 35°C. Adopting these conditions allows to obtain a pre-polymerization degree in the preferred range from 60 to 800g per gram of solid catalyst component, preferably from 150 to 500 g per gram of solid catalyst component. Step (i)a is further characterized by a low concentration of solid in the slurry, typically in the range from 50 g to 300 g of solid per liter of slurry.

The slurry containing the catalyst, preferably in pre-polymerized form, is discharged from the pre-polymerization reactor and fed to a gas-phase or liquid-phase polymerization reactor. In case of a gas-phase reactor, it generally consists of a fluidized or stirred, fixed bed reactor or a reactor comprising two interconnected polymerization zones one of which, working under fast fluidization conditions and the other in which the polymer flows under the action of gravity. The liquid phase process can be either in slurry, solution or bulk (liquid monomer). This latter technology can be carried out in various types of reactors such as continuous stirred tank reactors, loop reactors or plug-flow ones. The polymerization is generally carried out at temperature of from 20 to 120°C, preferably of from 40 to 85°C. When the polymerization is carried out in gas-phase the operating pressure is generally between 0.5 and 10 MPa, preferably between 1 and 5 MPa. In the bulk polymerization the operating pressure is generally between 1 and 6 MPa preferably between 1.5 and 4 MPa. Hydrogen can be used as a molecular weight regulator.

According to another aspect, the present invention provides a random copolymer of propylene containing from **3.8 to 4.8** % by weight of ethylene units, obtainable by a process comprising the step of copolymerizing propylene and ethylene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound,

**said random copolymer having:**
present invention have the following preferred features:

- melt flow rate (MFR) values according to ISO 1133 (230°C, 5 Kg) ranging from 0.01 to 5 g/lOmin, preferably from 0.5 to 2.5 g/lOmin, more preferably from 0.9 to 1.5 g/10min;;
- an amount of xylene soluble lower than 12.0 %, preferably lower than 10.0 %, more preferably lower than 9.0 %;
- a rheological polydispersity index (PI) ranging from 3.0 to 10.0, preferably from 3.5 to 6.0, more preferably from 4.0 to 5.0.

The copolymers of the present invention have the additional advantage that the pipe systems produced therefrom do not contain phthalate residues.

The copolymers of the present invention can also contain additives commonly employed in the art, such as antioxidants, light stabilizers, heat stabilizers, nucleating agents, colorants and fillers. Particularly, they can comprise an inorganic filler agent in an amount ranging from 0.5 to 60 parts by weight with respect to 100 parts by weight of the said heterophasic polyolefin composition. Typical examples of such filler agents are calcium carbonate, barium sulphate, titanium bioxide and talc. Talc and calcium carbonate are preferred. A number of filler agents can also have a nucleating effect, such as talc that is also a nucleating agent. The amount of a nucleating agent is typically from 0.5 to 5 wt% with respect to the polymer amount.

According to a further aspect, the present invention provides the use of the random copolymer of propylene described above for the manufacture of pipe systems.

According to a still further aspect, the present invention provides a pipe system comprising the random copolymer of propylene described above.

The pipe systems according to the present invention are particularly suitable for pressure pipe application.

The term "pipe system" as used herein includes pipe fittings, tubing, valves and all parts which are commonly necessary for e.g. a hot water piping system. Also included within the definition are single and multilayer pipes, where for example one or more of the layers is a metal layer and which may include an adhesive layer.

Such articles can be manufactured through a variety of industrial processes well known in the art, such as for instance moulding, extrusion.

The following examples are given to illustrate the present invention without any limiting purpose.

## EXAMPLES

### Methods

The characterization data for the propylene polymers and for the obtained films were obtained according to the following methods:

Ethylene content (C2)

Determined by IR spectroscopy. The comonomer content of the ethylene copolymer fraction is determined on the precipitated "amorphous" fraction of the polymer. The precipitated "amorphous" fraction is obtained as follows: to one 100 ml aliquot of the filtered liquid obtained as described above 200 ml of acetone are added under vigorous stirring. Precipitation must be complete as evidenced by a clear solid-solution separation. The solid thus obtained is filtered on a metallic screen and dried in a vacuum oven at 70°C until a constant weight is reached.

Melt flow rate (MFR)

Determined according to ISO 1133 (230°C, 5 Kg).

Polydispersity Index (PI)

Determined according to ISO 6721-10 method. PI is calculated by way of a dynamic test carried out with a RMS-800 rheometric mechanical spectrometer. The PI is defined by the equation:

$$PI=105/Gc,$$

where the Gc (crossover modulus) value is the one where G' (storage modulus) coincides with G" (loss modulus). A sample is prepared with one gram of polymer, said sample having a thickness of 3 mm and a diameter of 25 mm; it is then placed in the above mentioned apparatus and the temperature is then gradually increased until it reaches a temperature of 200 C after 90 minutes. At this temperature one carries out the test where G' and G" are measured in function of the frequency.

Xylene Solubles (XS)

Determined as follows: 2.5 g of polymer and 250 ml of xylene are introduced in a glass flask equipped with a refrigerator and a magnetical stirrer. The temperature is raised in 30 minutes up t the boiling pint of the solvent. The so obtained clear solution is then kept under reflux and stirring for further 30 minutes. The closed flask is then kept in thermostatic water bath at 25° C for 30 minutes. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Flexural modulus 24 h (MEF)

Determined according to ISO 178.

IZOD Impact Strength

Determined according to ISO 180/1A.

DBTT (ductile to brittle transition temperature)

Measured via a biaxial impact test by means of an impact tester equipped with the following features:

- Load cell with natural frequency equal to or greater than 15,000 Hz
- Capability to impact with a nominal energy of 16J approx (5.3Kg mass * 30cm falling height)
- Hemispheric impactor 1/2" diameter
- Specimen support 38mm diameter
- Capability to integrate Force/Time curve

DBTT Test description:

Ten (10) 1.55*38mm injection molded specimens are impacted at several different temperatures in order to find the 3 temperatures at which a ratio of 20-80%, 40-60%, 80-20%, respectively, of Brittle/Ductile failures occurs.

As Brittle failure is intended a failure absorbing a total energy equal to or lower than 2 Joules. The best interpolation curve is then traced between those 3 temperatures. The temperature where the event of 50% Brittle and 50% Ductile failures occurs is intended to represent the DBTT.

Melting Temperature (Tm) and Crystallization Temperature (Tc)

Determined by differential scanning calorimetry (DSC). Weighting 6 1 mg, is heated to 220 1° C at a rate of 20 °C/min and kept at 220 1° C for 2 minutes in nitrogen stream and it is thereafter cooled at a rate of 20° C/min to 40 2° C, thereby kept at this temperature for 2 min to crystallise the sample. Then, the sample is again fused at a temperature rise rate of 20° C/min up to 220° C 1. The second melting scan is recorded, a thermogram is obtained, and, from this, temperatures corresponding to peaks are read.

**Example 1**

Preparation of the solid catalyst component

Into a 500 mL four-necked round flask, purged with nitrogen, 250 mL of $TiCl_4$ were introduced at 0°C. While stirring, 10.0 g of microspheroidal $MgCl_2 \cdot 2.1C_2H_5OH$ having average particle size of 47$\mu$m (prepared in accordance with the method described in example 1 of EP728769, an amount of diethyl 2,3-diisopropylsuccinate such as to have a Mg/succinate molar ratio of 15 was added. The temperature was raised to 100°C and kept at this value for 60 min. After that the stirring was stopped, the liquid was siphoned off. After siphoning, fresh $TiCl_4$ and an amount of 9,9-bis(methoxymethyl)fluorene such as to have a Mg/diether molar ratio of 30 were added. Then the temperature was raised to 110°C and kept for 30 minutes under stirring. After sedimentation and siphoning at 85°C, fresh TiC14 was added. Then the temperature was raised to 90°C for 15min. After sedimentation and siphoning at 90°C the solid was washed six times with anhydrous hexane (6 x 100 ml) at 60 °C.

Preparation of the catalyst system

Before introducing it into the polymerization reactors, the solid catalyst component described above was contacted with aluminum-triethyl (TEAL) and dicyclopentyl-dimethoxysilane (DCPMS) at a temperature of 15°C under the conditions reported in Table 1.

Prepolymerization

The catalyst system was then subject to prepolymerization treatment at 20°C by maintaining it in suspension in liquid propylene for a residence time of 9 minutes before introducing it into the polymerization reactor.

Polymerization

The polymerization was carried out in gas-phase polymerization reactor comprising two interconnected polymerization zones, a riser and a downcomer, as described in European Patent EP782587. Hydrogen was used as molecular weight regulator.
The main polymerization conditions are reported in Table 1. The analytical data relating to the polymers produced are reported in Table 2.

Pelletization

The polymer particles exiting from the second polymerization step were subjected to a steam treatment to remove the unreacted monomers and dried.
Then they were added with the following additives:

- talc - 0.2 % by weight;
- calcium stearate, - 0.05 % by weight;
- Irgafos® 168 (supplied by Ciba, now part of BASF) - 0.15 % by weight;
- Irganox® 1010 (supplied by Ciba, now part of BASF) - 0.3 % by weight.

Thereafter they were extruded in a twin-screw extruder Berstorff (L/D=33) under the following operating conditions:

Flow rate: 50 Kg/h
Rotational speed: 220 rpm
Temperature of the feeding section: 80°C
Temperature of the melting section: 220°C
Temperature of the die section: 230°C
Melt temperature: 260°C

The data relating to the characterization of the obtained pellets are reported in Table 3.

**Example 2**

Example 1 was repeated except that, in order to differentiate the hydrogen concentration between the riser and the downcomer, a gas stream (barrier feed) was fed to the reactor as described in European Patent EP1012195. The main polymerization conditions are reported in Table 1. The analytical data relating to the polymers produced are reported in Table 2. The data relating to the characterization of the pellets are reported in Table 3.

**Example 3**

Preparation of the solid catalyst component

Into a 500 mL four-necked round flask, purged with nitrogen, 250 mL of $TiCl_4$ were introduced at 0°C. While stirring, 10.0 g of microspheroidal Mg $Cl_2 \cdot 2.1C_2H_5OH$ having average particle size of 47$\mu$m (prepared in accordance with the method described in example 1 of EP728769, an amount of diethyl 2,3-diisopropylsuccinate such as to have a Mg/succinate molar ratio of 24 was added. The temperature was raised to 110°C and kept at this value for 60 min. After that the stirring was stopped, the liquid was siphoned off. After siphoning, fresh $TiCl_4$ and an amount of 9,9-bis(methoxymethyl)fluorene such as to have a Mg/diether molar ratio of 12 were added. Then the temperature was raised to 100°C and kept for 30 minutes under stirring. After sedimentation and siphoning at 75°C, fresh TiC14 was added. Then the temperature was raised to 90°C for 15min. After sedimentation and siphoning at 75°C the solid was washed six times with anhydrous hexane (6 x 100 ml) at 60 °C.
With the thus obtained solid catalyst component a catalyst system was prepared that was then subjected to prepolymerization and thereafter used in polymerization, all according to the procedure described in example 2.
The main polymerization conditions are reported in Table 1. The analytical data relating to the polymers produced are reported in Table 2.

**Example 4 (comparative)**

A propylene random copolymer was prepared from a phthalate-containing Ziegler-Natta catalyst prepared according to the Example 5, lines 48-55, of EP728769. The main polymerization conditions are reported in Table 1. The analytical data relating to the polymers produced are reported in Table 2. The data relating to the characterization of the pellets are reported in Table 3.

Table 1 - Polymerization conditions

| | | **Ex.1** | **Ex.2** | **Ex.3** | **Ex.4 (Comp.)** |
|---|---|---|---|---|---|
| TEAL/external donor | wt/wt | 6 | 5 | 4 | 4 |
| TEAL/catalyst | wt/wt | 9 | 8 | 7 | 4 |
| Temperature | °C | 73 | 73 | 73 | 73 |
| Pressure | bar-g | 28 | 28 | 28 | 28 |
| C2/(C3+C2) riser | mol/mol | 0.026 | 0.025 | 0.027 | 0.021 |
| C2/(C3+C2) downcomer | mol/mol | 0.010 | 0.013 | 0.024 | 0.019 |
| H2/C3 riser | mol/mol | 0.003 | 0.009 | 0.028 | 0.007 |
| H2 downcomer (*) | ppm | - | 320 | 570 | 260 |

(*) if different from the riser
C2 = ethylene; C3 = propylene; H2 = hydrogen

Table 2 - Polymer characteristics

| | | **Ex.1** | **Ex.2** | **Ex.3** | **Ex.4 (Comp.)** |
|---|---|---|---|---|---|
| Ethylene content | %wt | 4.0 | 4.1 | 4.3 | 4.0 |
| MFR (230°C/5kg) | g/10' | 1.0 | 0.9 | 1.1 | 1.2 |
| PI | | 4.9 | 4.0 | 5.0 | 5.0 |
| XS | % | 8.6 | 8.7 | 7.8 | 8.7 |

Table 3 - Pellets characterization

| | | **Ex.1** | **Ex.2** | **Ex.3** | **Ex.4 (Comp.)** |
|---|---|---|---|---|---|
| MEF 24h | MPa | 780 | 840 | 780 | 870 |
| IZOD 0°C 24h | $kJ/m^2$ | 23.6 | 18.8 | 24.0 | 17.7 |
| DB/TT | °C | 1.9 | 2.5 | 1.0 | 4.6 |
| Tm | °C | 139.9 | 139.3 | 138.1 | 140.2 |
| Tc | °C | 96.3 | 96.2 | 95.7 | 98.3 |

Data reported in table 3 show that the polymers of the invention are endowed with improved impact (Izod and DB/TT) while maintaining good rigidity (MEF).

## Claims

1. A process for the preparation of random copolymer of propylene containing from 3.8 to 4.8% by weight of ethylene units, comprising the step of copolymerizing propylene and ethylene in the presence of a catalyst system comprising the product obtained by contacting the following components:

   (a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from

1,3 diethers,
(b) an aluminum hydrocarbyl compound, and
(c) optionally an external electron donor compound.

**2.** The process according to claim 1, wherein the succinate is of formula (I):

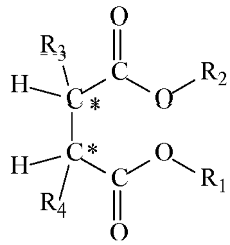

(I)

wherein the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, C3-C20 cycloalkyl, C5-C20 aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S).

**3.** The process according to any of claims 1 or 2, wherein the 1,3-diether is of formula (I):

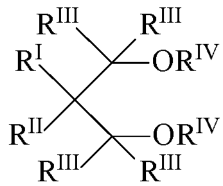

(I)

wherein $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

**4.** The process according to any of claims 1 to 3, wherein the succinate is present in amount ranging from 40 to 90% by mol with respect to the total amount of internal donors.

**5.** A random copolymer of propylene containing from 3.8 to 4.8% by weight of ethylene units obtainable by a process comprising the step of copolymerizing propylene and ethylene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound

said random copolymer having:

- melt flow rate (MFR) values according to ISO 1133 (230°C, 5 Kg) ranging from 0.01 to 5 g/lOmin, preferably from 0.5 to 2.5 g/lOmin, more preferably from 0.9 to 1.5 g/10min;
- an amount of xylene soluble lower than 12.0 %, preferably lower than 10.0 %, more preferably lower than 9.0 %;
- a rheological polydispersity index (PI) ranging from 3.0 to 10.0, preferably from 3.5 to 6.0, more preferably from 4.0 to 5.0.

6. Use of the random copolymer of propylene according to claim 5 for the manufacture of pipe systems.

7. A pipe system comprising the random copolymer of propylene according to claim 5.

**Patentansprüche**

1. Verfahren zur Herstellung von statistischem Copolymer (Random-Copolymer) von Propylen, das 3,8 bis 4,8 Gew.% Ethyleneinheiten enthält, umfassend den Schritt des Copolymerisierens von Propylen und Ethylen in Gegenwart eines Katalysatorsystems, welches das Produkt umfasst, das durch Kontaktieren der folgenden Komponenten erhalten wird:

   (a) einer festen Katalysatorkomponente, umfassend ein Magnesiumhalogenid, eine Titanverbindung mit mindestens einer Ti-Halogen-Bindung und mindestens zwei Elektronendonorverbindungen, von denen eine in einer Menge von 40 bis 90 Mol.% in Bezug auf die Gesamtmenge der Donoren vorhanden ist und ausgewählt ist aus Succinaten und die andere ausgewählt ist aus 1,3-Diethern,
   (b) einer Aluminiumkohlenwasserstoffverbindung und
   (c) gegebenenfalls einer externen Elektronendonorverbindung.

2. Verfahren nach Anspruch 1, wobei das Succinat die Formel (I) hat:

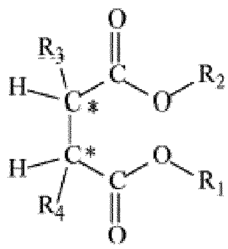

(I)

wobei die Reste $R_1$ und $R_2$, die gleich oder voneinander verschieden sind, jeweils eine lineare oder verzweigte $C_1$- bis $C_{20}$-Alkyl-, Alkenyl-, Cycloalkyl-, Aryl-, Arylalkyl- oder Alkylarylgruppe sind, die gegebenenfalls Heteroatome enthält; und die Reste $R_3$ und $R_4$, die gleich oder voneinander verschieden sind, $C_1$- bis $C_{20}$-Alkyl, $C_3$- bis $C_{20}$-Cycloalkyl-, $C_5$- bis $C_{20}$-Aryl-, Arylalkyl- oder Alkylarylgruppe sind, mit der Maßgabe, dass mindestens eines von ihnen verzweigtes Alkyl ist; wobei die Verbindungen in Bezug auf die in der Struktur der Formel (I) angegebenen beiden asymmetrischen Kohlenstoffatome Stereoisomere des Typs (S,R) oder (R,S) sind.

3. Verfahren nach einem der Ansprüche 1 oder 2, wobei der 1,3-Diether die Formel (I) hat:

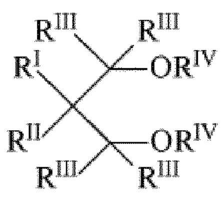

(I)

wobei $R^I$ und $R^{II}$ gleich oder voneinander verschieden sind und Wasserstoff oder lineare oder verzweigte $C_1$- bis $C_{18}$-Kohlenwasserstoffgruppen sind, die auch eine oder mehrere cyclische Strukturen bilden können; $R^{III}$-Gruppen, die gleich oder voneinander verschieden sind, Wasserstoff oder $C_1$- bis $C_{18}$-Kohlenwasserstoffgruppen sind; $R^{IV}$-Gruppen, die gleich oder voneinander verschieden sind, die gleiche Bedeutung wie $R^{III}$ haben, außer dass sie nicht Wasserstoff sein können; jede der Gruppen $R^I$ bis $R^{IV}$ Heteroatome ausgewählt aus Halogenen, N, O, S und Si enthalten kann.

4. Verfahren nach einem der Ansprüche 1 bis 3, wobei das Succinat in einer Menge im Bereich von 40 bis 90 Mol.% in Bezug auf die Gesamtmenge der internen Donoren vorhanden ist.

5. Random-Copolymer von Propylen, das 3,8 bis 4,8 Gew.% Ethyleneinheiten enthält, das nach einem Verfahren

erhältlich ist, das den Schritt des Copolymerisierens von Propylen und Ethylen in Gegenwart eines Katalysatorsystems umfasst, welches das Produkt umfasst, das durch Kontaktieren der folgenden Komponenten erhalten wird:

(a) einer festen Katalysatorkomponente, umfassend ein Magnesiumhalogenid, eine Titanverbindung mit mindestens einer Ti-Halogen-Bindung und mindestens zwei Elektronendonorverbindungen, von denen eine in einer Menge von 40 bis 90 Mol.% in Bezug auf die Gesamtmenge der Donoren vorhanden ist und ausgewählt ist aus Succinaten und die andere ausgewählt ist aus 1,3-Diethern,
(b) einer Aluminiumkohlenwasserstoffverbindung und
(c) gegebenenfalls einer externen Elektronendonorverbindung,

wobei das Random-Copolymer aufweist:

- Werte der Schmelzflussrate (MFR) gemäß ISO 1133 (230 °C, 5 Kg) im Bereich von 0,01 bis 5 g/10 min, vorzugsweise 0,5 bis 2,5 g/10 min, bevorzugter 0,9 bis 1,5 g/10 min;
- eine Menge an xylollöslichen Bestandteilen kleiner als 12,0 %, vorzugsweise kleiner als 10,0 %, bevorzugter kleiner als 9,0 %;
- einen rheologischen Polydispersitätsindex (PI) im Bereich von 3,0 bis 10,0, vorzugsweise 3,5 bis 6,0, bevorzugter von 4,0 bis 5,0.

**6.** Verwendung des Random-Copolymers von Propylen gemäß Anspruch 5 zur Fertigung von Rohrsystemen.

**7.** Rohrsystem, umfassend das Random-Copolymer von Propylen gemäß Anspruch 5.

## Revendications

**1.** Procédé pour la préparation d'un copolymère statistique de propylène contenant 3,8 à 4,8% en poids de motifs d'éthylène, comprenant l'étape de copolymérisation de propylène et d'éthylène en présence d'un système catalytique comprenant le produit obtenu par mise en contact des constituants suivants :

(a) un constituant catalytique solide comprenant un halogénure de magnésium, un composé à base de titane présentant au moins une liaison Ti-halogène et au moins deux composés donneurs d'électrons dont l'un est présent en une quantité de 40 à 90% en mole par rapport à la quantité totale de donneurs et choisi parmi les succinates et l'autre est choisi parmi les 1,3-diéthers,
(b) un composé hydrocarbyle d'aluminium, et
(c) éventuellement un composé donneur d'électrons externe.

**2.** Procédé selon la revendication 1, le succinate étant de formule (I) :

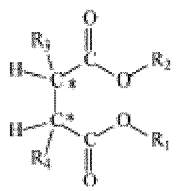

(I)

dans laquelle les radicaux $R_1$ et $R_2$, identiques ou différents l'un de l'autre, représentent un groupe alkyle, alcényle, cycloalkyle, aryle, arylalkyle ou alkylaryle en $C_1$-$C_{20}$, linéaire ou ramifié, contenant éventuellement des hétéroatomes ; et les radicaux $R_3$ et $R_4$, identiques ou différents l'un de l'autre, représentent un groupe alkyle en $C_1$-$C_{20}$, cycloalkyle en $C_3$-$C_{20}$, aryle en $C_5$-$C_{20}$, arylalkyle ou alkylaryle, à condition qu'au moins l'un d'entre eux soit un alkyle ramifié ; lesdits composés étant, par rapport aux deux atomes de carbone asymétriques identifiés dans la structure de formule (I), des stéréoisomères du type (S,R) ou (R, S).

**3.** Procédé selon l'une quelconque des revendications 1 ou 2, le 1,3-diéther étant de formule (I) :

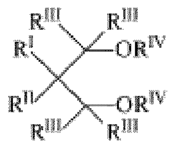

(I)

dans laquelle $R^I$ et $R^{II}$ sont identiques ou différents et représentent hydrogène ou des groupes hydrocarbonés linéaires ou ramifiés en $C_1$-$C_{18}$ qui peuvent également former une ou plusieurs structures cycliques ; les groupes $R^{III}$, identiques ou différents les uns des autres, représentent hydrogène ou des groupes hydrocarbonés en $C_1$-$C_{18}$; les groupes $R^{IV}$ identiques ou différents l'un de l'autre, ont la même signification que $R^{III}$ sauf qu'ils ne peuvent pas représenter hydrogène ; chacun des groupes $R^I$ à $R^{IV}$ peut contenir des hétéroatomes choisis parmi les halogènes, N, O, S et Si.

**4.** Procédé selon l'une quelconque des revendications 1 à 3, le succinate étant présent en une quantité de 40 à 90% en mole par rapport à la quantité totale de donneurs internes.

**5.** Copolymère statistique de propylène contenant 3,8 à 4,8% en poids de motifs d'éthylène, pouvant être obtenu par un procédé comprenant l'étape de copolymérisation de propylène et d'éthylène en présence d'un système catalytique comprenant le produit obtenu par mise en contact des constituants suivants :

(a) un constituant catalytique solide comprenant un halogénure de magnésium, un composé de titane présentant au moins une liaison Ti-halogène et au moins deux composés donneurs d'électrons dont l'un est présent en une quantité de 40 à 90% en mole par rapport à la quantité totale de donneurs et choisi parmi les succinates et l'autre est choisi parmi les 1,3-diéthers,
(b) un composé hydrocarbyle d'aluminium, et
(c) éventuellement un composé donneur d'électrons externe,

ledit copolymère statistique présentant :

- des valeurs de l'indice de fluidité à chaud (MFR) selon la norme ISO 1133 (230°C, 5 kg) situées dans une plage de 0,01 à 5 g/10 min, préférablement de 0,5 à 2,5 g/10 min, plus préférablement de 0,9 à 1,5 g/10 min ;
- une quantité soluble dans le xylène inférieure à 12,0%, préférablement inférieure à 10,0%, plus préférablement inférieure à 9,0% ;
- un indice de polydispersité rhéologique (PI) situé dans une plage de 3,0 à 10,0, préférablement de 3,5 à 6,0, plus préférablement de 4,0 à 5,0.

**6.** Utilisation du copolymère statistique de propylène selon la revendication 5 pour la fabrication de systèmes de tuyaux.

**7.** Système de tuyau comprenant le copolymère statistique de propylène selon la revendication 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6362298 B
- US 4298718 A
- US 4495338 A
- EP 728769 A
- EP 782587 A
- EP 1012195 A

### Non-patent literature cited in the description

- **CHENG WEISHU.** Study on proves for polypropylene random copolymer resins for pipes. *Hecheng Shuzhi Ji Suliao,* 2009, vol. 26 (6), ISSN 1002-1396, 35-38